# EUROPÄISCHE PATENTSCHRIFT

(11) **EP 4 479 295 B1**
(45) Veröffentlichungstag und Bekanntmachung des Hinweises auf die Patenterteilung: **22.10.2025**
(21) Anmeldenummer: 23701639.9
(22) Anmeldetag: 19.01.2023
(51) Int. Cl.: B62J 1/12, B62J 1/14

(54) **SITZVORRICHTUNG FÜR EIN NEIGEFAHRZEUG**
SEAT DEVICE FOR A TILTING VEHICLE
DISPOSITIF D'ASSISE POUR VÉHICULE INCLINABLE

(30) Priorität: 15.02.2022 DE 102022103466
(43) Veröffentlichungstag der Anmeldung: 25.12.2024
(73) Patentinhaber: Bayerische Motoren Werke Aktiengesellschaft, 80809 München (DE)
(72) Erfinder: GOLLING, Adrian, 82194 Gröbenzell (DE); STRASSER, Dieter, 82386 Oberhausen (DE)
(86) Internationale Anmeldenummer: PCT/EP2023/051162
(87) Internationale Veröffentlichungsnummer: WO 2023/156118

(56) Entgegenhaltungen:
- DE-A1- 102011 007 526
- JP-U- S57 202 390
- JP-U- S58 143 776
- US-A- 4 563 038

## Beschreibung

Die Erfindung betrifft eine Sitzvorrichtung für ein Neigefahrzeug mit mindestens einem ersten Sitzbankbereich, der eine erste Sitzfläche, an der ein Fahrer zum Führen und Betreiben des Neigefahrzeugs anordenbar ist, und der zumindest ein erstes Wannenelement umfasst, mit mindestens einem zweiten Sitzbankbereich, der eine zweite Sitzfläche, an dem ein Beifahrer, wie Sozius, anordenbar ist, und der zumindest ein zweites Wannenelement umfasst, mit mindestens einer Trägereinheit, an der der erste Sitzbankbereich und an der der zweite Sitzbankbereich festlegbar oder festgelegt sind, und mit mindestens einer Verstelleinrichtung, durch die zumindest der zweite Sitzbankbereich werkzeuglos durch Bewegen entgegen einer Fügerichtung aus einer ersten Sitzposition, in der der Abstand zwischen erstem Sitzbankbereich und zweitem Sitzbankbereich minimal ist und in der der zweite Sitzbankbereich gegen ein Bewegen quer zur Fügerichtung festgelegt ist, lösbar und in eine Verstellposition überführbar ist, in der der zweite Sitzbankbereich für ein Bewegen quer zur Fügerichtung freigegeben ist und in der der quer zur Fügerichtung bewegte zweite Sitzbankbereich durch Bewegen in Fügerichtung in mindestens einer bezüglich der ersten Sitzposition versetzten zweiten Sitzposition anordenbar ist, in der der Abstand zwischen erstem Sitzbankbereich und zweitem Sitzbankbereich bezüglich der ersten Sitzposition vergrößert ist und in der der zweite Sitzbankbereich gegen ein Bewegen quer zur Fügerichtung festgelegt ist.

Sitzvorrichtungen sind in unterschiedlichen Ausgestaltungsformen aus dem Stand der Technik bekannt. Es sind Neigefahrzeuge bekannt, bei denen keine Sitzbankträger vorgesehen sind, sondern die Sitzvorrichtung unmittelbar am Fahrzeugrahmen festgelegt sind. Ein selbsttätiges Verstellen der Sitzvorrichtung in Längsrichtung ist hierdurch nicht mehr möglich. Zum Verstellen der Sitzvorrichtung muss die Sitzvorrichtung umständlich in einer Werkstatt gelöst, verschoben und wieder festgelegt werden. Dieses erweist sich als zeit- und kostenintensiv.

Eine gattungsgemäße Sitzvorrichtung ist bekannt aus DE 10 2011 007 526 A1.

Eine Aufgabe eines Ausführungsbeispiels der Erfindung ist, eine Sitzvorrichtung für ein Neigefahrzeug vorzuschlagen, bei der eine Längsverstellung der Sitzvorrichtung ermöglicht und die Gefahr einer Fehlbedienung durch einen Benutzer des Neigefahrzeugs reduziert ist.

Diese Aufgabe wird bei einer eingangs genannten Sitzvorrichtung dadurch gelöst, dass die Fügerichtung quer oder schräg zur Längsachse des Neigefahrzeugs verläuft.

Dadurch, dass die Sitzvorrichtung einen ersten Sitzbankbereich und einen zweiten Sitzbankbereich umfasst, wobei der zweite Sitzbankbereich relativ zum ersten Sitzbankbereich bewegbar und in einer ersten sowie in einer zweiten Sitzposition anordenbar ist, ist die Sitzvorrichtung bezüglich ihrer Erstreckung quer zur Fügerichtung veränderbar.

Der Abstand zwischen erstem Sitzbankbereich und zweitem Sitzbankbereich quer zur Fügerichtung zu verstehen. Die Sitzvorrichtung kann hierdurch parallel oder schräg zur Längsachse des Neigefahrzeugs verlängert oder wieder verkürzt werden.

Dadurch, dass der zweite Sitzbankbereich werkzeuglos durch Bewegen entgegen der Fügerichtung aus der ersten Sitzposition lösbar ist und in der Verstellposition in mindestens eine zweite Sitzposition überführbar ist, kann die Sitzvorrichtung durch einen Nutzer werkzeuglos verstellt werden.

Die Fügerichtung verläuft parallel oder schräg zu einer Hochachse des Neigefahrzeugs und in Richtung weg von der ersten Sitzfläche, bzw. der zweiten Sitzfläche. Hierdurch ist der zweite Sitzbankbereich sicher in der ersten Sitzposition, bzw. in der zweiten Sitzposition angeordnet und nur durch aktives Bewegen in Richtung zweiter Sitzfläche, also entgegen der Fügerichtung, aus der ersten Sitzposition, bzw. der zweiten Sitzposition lösbar.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Bei einer Weiterbildung der Sitzvorrichtung erweist es sich als vorteilhaft, wenn der erste Sitzbankbereich an der Trägereinheit mit dem ersten Wannenelement auf der der ersten Sitzfläche abgewandten Seite zumindest abschnittsweise linien- oder flächenhaft berührend anliegt und/oder dass der zweite Sitzbankbereich in der ersten Sitzposition und in der zweiten Sitzposition an der Trägereinheit mit dem zweiten Wannenelement auf der der zweiten Sitzfläche abgewandten Seite zumindest abschnittsweise linien- oder flächenhaft berührend anliegt und in der Verstellposition mit dem zweiten Wannenelement berührungsfrei zur Trägereinheit beabstandet ist.

Wenn der erste Sitzbankbereich, bzw. der zweite Sitzbankbereich jeweils mit seinem Wannenelement an der Trägereinheit linien- oder flächenhaft berührend anliegt, können auf einfache Weise Kräfte des ersten Sitzbankbereichs, bzw. des zweiten Sitzbankbereichs auf die Trägereinheit übertragen werden. Wenn der zweite Sitzbankbereich in der Verstellposition berührungsfrei zur Trägereinheit beabstandet ist, kann der zweite Sitzbankbereich auf einfache Weise von der ersten Sitzposition in die zweite Sitzposition und umgekehrt überführt werden.

Um das Anordnen des zweiten Sitzbankbereichs in der ersten Position und der mindestens einen zweiten Sitzposition zu erleichtern, erweist es sich als vorteilhaft, wenn die Verstelleinrichtung eine Führungseinheit umfasst, durch die das Bewegen des zweiten Sitzbankbereichs quer zur Fügerichtung führbar oder geführt ist, wobei die Führungseinheit mindestens eine quer zur Fügerichtung erstreckte durchgehende Aussparung im zweiten Wannenelement und mindestens ein in Fügerichtung erstrecktes und an der Trägereinheit festgelegtes bolzen- oder zapfenförmiges Führungsmittel umfasst, das einen zur Aussparung korrespondierenden, insbesondere komplementären, Querschnitt umfasst.

Dadurch, dass die Verstelleinrichtung eine Führungseinheit umfasst, kann ein Überführen des zweiten Sitzbankbereichs von der ersten Sitzposition in die mindestens eine zweite Sitzposition geführt werden. Die Aussparung ist solchenfalls quer zur Fügerichtung erstreckt. Darüber hinaus kann die Aussparung parallel oder schräg zur Längsrichtung des Neigefahrzeugs erstreckt sein.

Das Führen durch die Führungseinheit kann weiter verbessert sein, wenn die Führungseinheit mindestens zwei Aussparungen und mindestens zwei Führungsmittel umfasst, insbesondere, wenn die Führungseinheit mindestens vier Aussparungen und vier hierzu korrespondierende Führungsmittel umfasst. Solchenfalls ist die Gefahr eines Verkantens reduziert und ein genaues Anordnen des zweiten Sitzbankbereichs über den jeweiligen Sitzbankpositionen verbessert.

Durch das Vorsehen der Führungseinheit kann zudem das genaue Anordnen des zweiten Sitzbankbereichs über der jeweiligen Sitzposition verbessert sein, so dass nach dem Überführen des zweiten Sitzbankbereichs in die erste Sitzposition, bzw. in die zweite Sitzposition lediglich ein Überführen in Überführungsrichtung erfolgen muss.

Bei einer Weiterbildung letztgenannter Ausführungsform erweist es sich als vorteilhaft, wenn die mindestens eine Aussparung mit einem ersten Ende einen Anschlag für das Führungsmittel in der ersten Sitzposition des zweiten Sitzbankbereichs und/oder mit einem zweiten Ende einen Anschlag für das Führungsmittel in der zweiten Sitzposition des zweiten Sitzbankbereichs bildet.

Dadurch, dass die mindestens eine Aussparung der Führungseinheit mit einem ersten Ende einen Anschlag für das Führungsmittel in der ersten Sitzposition des zweiten Sitzbankbereichs und/oder mit einem zweiten Ende einen Anschlag für das Führungsmittel in der zweiten Sitzposition des zweiten Sitzbankbereichs bildet, kann ein Nutzer des Neigefahrzeugs den zweiten Sitzbankbereich auf einfache Weise von der einen Sitzposition in die andere Sitzposition überführen und durch Bewegen in Fügerichtung auf einfache Weise die jeweilige Sitzposition anordnen. Durch das Bilden des mindestens einen Anschlag ist ein Nutzer des Neigefahrzeugs nicht auf "Versuch und Irrtum" angewiesen, sondern findet die jeweilige vordefinierte Sitzposition auf einfache Weise.

Um ein Bewegen des zweiten Sitzbankbereichs in den unterschiedlichen Sitzpositionen quer zur Fügerichtung zu verhindern, erweist es sich als vorteilhaft, wenn die Verstelleinrichtung mindestens einen Vorsprung an der Trägereinheit oder an dem zweiten Wannenelement umfasst und/oder wenn die Verstelleinrichtung mindestens zwei korrespondierend, insbesondere komplementär, zum Vorsprung ausgebildete Ausnehmungen an dem zweiten Wannenelement bzw. an der Trägereinheit umfasst, von denen eine auf Höhe der ersten Sitzposition und eine auf Höhe der zweiten Sitzposition angeordnet ist und in die der Vorsprung in der jeweiligen Sitzposition eingreift und den zweiten Sitzbankbereich gegen ein Bewegen quer zur Fügerichtung festlegt.

Es erweist sich als vorteilhaft, wenn der Vorsprung und die Aussparung in der Verstellposition außer Eingriff sind.

Bei einer Weiterbildung letztgenannter Ausführungsform erweist es sich als vorteilhaft, wenn die Verstelleinrichtung mindestens zwei Vorsprünge umfasst und wenn die Verstelleinrichtung mindestens vier Aussparungen umfasst. Solchenfalls sind jedem Vorsprung zwei Aussparungen zuordenbar, wobei eine erste Aussparung der ersten Sitzposition und die zweite Aussparung der zweiten Sitzposition zugeordnet ist. Darüber hinaus können einem Vorsprung auch mehr als zwei Aussparungen zugeordnet sein und solchenfalls ein Anordnen des Sitzbankbereichs in weiteren Sitzpositionen ermöglicht sein.

Die weiteren Sitzpositionen können solchenfalls zwischen der ersten Sitzposition und der zweiten Sitzposition angeordnet sein.

Um den zweiten Sitzbankbereich einer Trägereinheit festzulegen, ist bei einer Weiterbildung der Sitzvorrichtung vorgesehen, dass die Verstelleinrichtung mindestens ein Festlegemittel umfasst, durch das der zweite Sitzbankbereich an der Trägereinheit zumindest in seiner Bewegung in oder entgegen der Fügerichtung begrenzt festlegbar ist und/oder dass die Verstelleinrichtung mindestens ein Spannmittel umfasst, durch das der zweite Sitzbankbereich in Fügerichtung auf die Trägereinheit vorgespannt ist.

Das Festlegemittel kann technisch beliebig ausgebildet sein, sofern es den zweiten Sitzbankbereich an der Trägereinheit in seiner Bewegung in oder entgegen der Fügerichtung begrenzt festlegt. Festlegemittel und Spannmittel können ein Federpaket bilden, durch das der zweite Sitzbankbereich in Richtung Trägereinheit vorgespannt wird. Solchenfalls ist beim Überführen des zweiten Sitzbankbereichs von der jeweiligen Sitzposition in die Verstellposition zunächst die Spannkraft des Spannmittels zu überwinden. Durch das Spannmittel wird solchenfalls beim Erreichen der nächsten Sitzposition der zweite Sitzbankbereich automatisch durch das Spannmittel in die jeweilige Sitzposition in Fügerichtung bewegt. Hierdurch kann gewährleistet werden, dass der zweite Sitzbankbereich ohne manuelles Einwirken stets in einer Sitzposition angeordnet ist.

In Zusammenwirken mit dem Vorsprung und der Aussparung, kann hierdurch zum einen ein Festlegen gegen ein Bewegen quer zur Fügerichtung sowie ein Festlegen entgegen der Fügerichtung gewährleistet werden.

Das Festlegemittel kann grundsätzlich beliebig ausgebildet sein, sofern es der Funktion nachkommt, den zweiten Sitzbankbereich an der Trägereinheit zumindest in seiner Bewegung in oder entgegen der Fügerichtung begrenzt festzulegen.

Bei einer Ausführungsform der Sitzvorrichtung ist vorgesehen, dass das Festlegemittel die Aussparung und eine Öffnung in der Trägereinheit mit einem Halsabschnitt durchgreift, wobei das Festlegemittel einen Kopfabschnitt mit einem Querschnitt umfasst, der größer ist als der Querschnitt der Aussparung und der in der ersten Sitzposition und der zweiten Sitzposition an zweiten Wannenelement anliegt, und wobei am Festlegemittel auf der dem Kopfabschnitt abgewandten Seite mindestens ein Anschlagelement am Halsabschnitt festlegbar ist, das bezüglich des Halsabschnitts einen erweiterten Querschnitt umfasst.

Solchenfalls kann das Festlegemittel beispielsweise schrauben- oder bolzenartig ausgebildet sein. Das Anschlagelement, das am Halsabschnitt festlegbar ist, kann ein separates oder separierbares Bauteil umfassen.

Darüber hinaus kann das Anschlagelement durch das zweite Wannenelement des zweiten Sitzbankbereichs gebildet sein, beispielsweise, wenn das Festlegemittel auf der dem Kopfabschnitt abgewandten Seite ein Außengewindeabschnitt umfasst, mit dem das Festlegemittel in das zweite Wannenelement einschraubbar ist. Darüber hinaus kann das Anschlagelement durch einen Bajonettverschluss, der zwischen zweitem Wannenelement und Festlegemittel gebildet ist, realisiert sein.

Bei einer Weiterbildung letztgenannter Ausführungsformen erweist es sich als vorteilhaft, wenn das Spannmittel zwischen dem Anschlagelement und einer dem zweiten Wannenelement abgewandten Seite der Trägereinheit abgestützt ist, insbesondere wenn das Spannmittel den Halsabschnitt des Festlegemittels umfangsseitig umgebend am Festlegemittel angeordnet ist.

Solchenfalls ist das Festlegemittel nicht unmittelbar am zweiten Wannenelement festgelegt, sondern mittelbar durch das Spannmittel, dass sich gegenüber dem Anschlagelement, das am Festlegemittel festgelegt ist, und dem zweiten Wannenelement abstützt.

Wenn das Spannmittel den Halsabschnitt des Festlegemittels umfangseitig umgibt, ist das Spannmittel verliersicher festgelegt.

Darüber hinaus sind Ausführungsformen der Sitzvorrichtung denkbar, bei denen die Trägereinheit, das mindestens eine Festlegemittel und/oder das mindestens eine Führungsmittel voneinander separierbare Bauteile umfassen oder ein gemeinsames, einstückiges Bauteil bilden.

Wenn Trägereinheit, das mindestens eine Festlegemittel und/oder das mindestens eine Führungsmittel voneinander separierbare Bauteile bilden, können herkömmliche Sitzvorrichtungen auf einfache Weise nachgerüstet werden.

Wenn Trägereinheit, das mindestens eine Festlegemittel und/oder das mindestens eine Führungsmittel ein gemeinsames einstückiges Bauteil bilden, kann die Sitzvorrichtung bauteilreduziert ausgebildet werden. Darüber hinaus kann eine Ausführungsform der Sitzvorrichtung vorsehen, dass die Trägereinheit ein separates Bauteil umfasst und das Festlegemittel und das Führungsmittel ein gemeinsames, einstückiges Bauteil bilden.

Darüber hinaus sind Ausführungsformen der Sitzvorrichtung denkbar, bei denen die Trägereinheit ein einstückiges gemeinsames Bauteil umfasst, an dem der erste Sitzbankbereich und der zweite Sitzbankbereich festlegbar oder festgelegt sind oder bei denen die Trägereinheit ein erstes Trägerelement, an dem der erste Sitzbankbereich festlegbar oder festgelegt ist, und ein zweites Trägerelement umfasst, an dem der zweite Sitzbankbereich festlegbar oder festgelegt ist, wobei erstes Trägerelement und zweites Trägerelement lösbar oder unlösbar aneinander festlegbar oder festgelegt sind.

Wenn die Trägereinheit ein einstückiges, gemeinsames Bauteil bildet, kann die Sitzvorrichtung bauteilreduziert ausgebildet sein. Wenn die Trägereinheit ein erstes Trägerelement und ein zweites Trägerelement umfasst, kann der zweite Sitzbankbereich auf einfache Weise ausgetauscht werden oder eine Sitzvorrichtung, die ausschließlich eine Trägereinheit mit einem ersten Trägerelement umfasst, um ein zweites Trägerelement und hierdurch um einen zweiten Sitzbankbereich erweitert werden.

Um eine Relativbewegung zwischen zweitem Sitzbankbereich und Trägereinheit abzupuffern, erweist es sich als vorteilhaft, wenn die Sitzvorrichtung mindestens ein komprimierbares Pufferelement umfasst, das an der Trägereinheit, insbesondere am zweiten Trägerelement der Trägereinheit angeordnet ist und das in der ersten Sitzposition und der zweiten Sitzposition am zweiten Wannenelement des zweiten Sitzbankbereichs anliegt.

Weitere Merkmale, Einzelheiten und Vorteile der Erfindung ergeben sich aus den beigefügten Patentansprüchen, aus der zeichnerischen Darstellung und nachfolgenden Beschreibung zweier bevorzugter Ausführungsformen der Sitzvorrichtung.

In der Zeichnung zeigt:
- Figur 1: Eine schematische Seitenansicht auf ein Ausführungsbeispiel der Sitzvorrichtung;
- Figur 2: Eine perspektivische Draufsicht auf ein zweites Wannenelement der Sitzvorrichtung gemäß Figur 1;

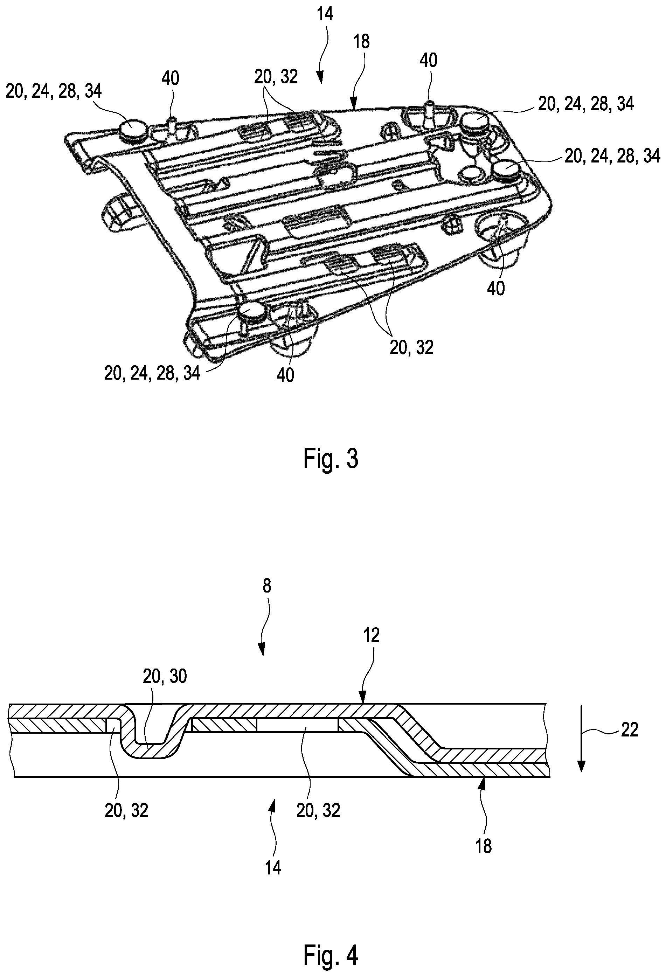

- Figur 3: Eine perspektivische Draufsicht auf ein zweites Trägerelement der Trägereinheit gemäß Figur 1 ;
- Figur 4: Eine Schnittansicht entlang der Linie AA gemäß Figur 2;
- Figur 5: Eine Schnittansicht entlang der Linie BB gemäß Figur 2;
- Figur 6: Eine geschnittene Ansicht auf ein zweites Ausführungsbeispiel der Sitzvorrichtung.

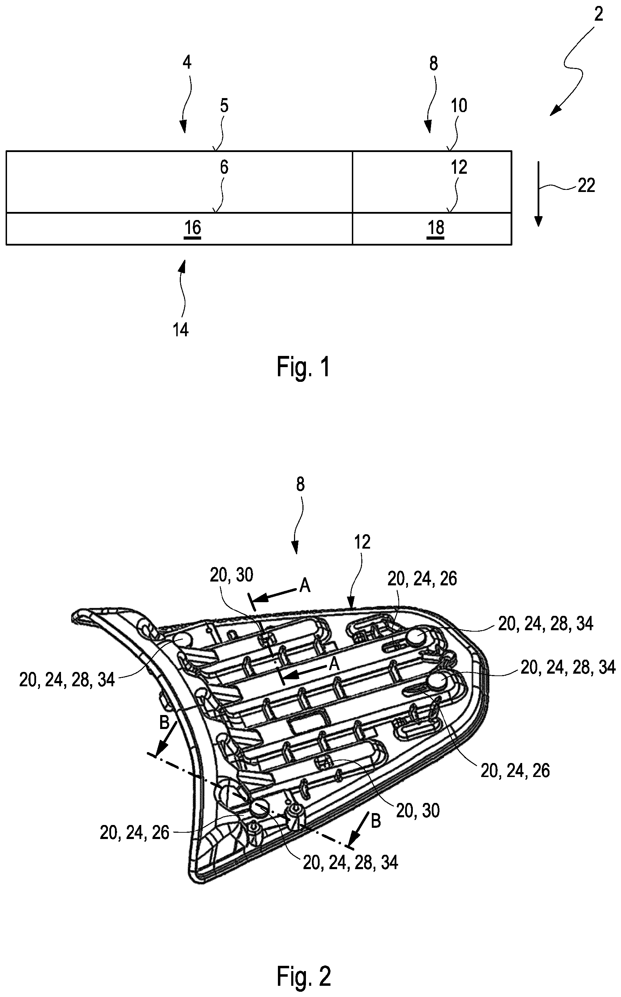

Figur 1 zeigt eine insgesamt mit dem Bezugszeichen 2 versehene Sitzvorrichtung für ein Neigefahrzeug. Die Sitzvorrichtung 2 umfasst einen ersten Sitzbankbereich 4, der eine erste Sitzfläche 5, an der ein Fahrer zum Führen und Betreiben des Neigefahrzeugs anordenbar ist, und der zumindest ein erstes Wannenelement 6 umfasst.

Darüber hinaus umfasst die Sitzvorrichtung 2 einen zweiten Sitzbankbereich 8, der eine zweite Sitzfläche 10, an dem ein Beifahrer, wie Sozius, anordenbar ist, und der zumindest ein zweites Wannenelement 12 umfasst.

Darüber hinaus umfasst die Sitzvorrichtung 2 eine Trägereinheit 14, an der der erste Sitzbankbereich 4 und der zweite Sitzbankbereich 8 festgelegt sind. Bei dem in Figur 1 dargestellten Ausführungsbeispiel umfasst die Trägereinheit 14 ein erstes Trägerelement 16, an dem der erste Sitzbankbereich 4 mit dem ersten Wannenelement 6 festgelegt ist und ein zweites Trägerelement 18, an dem der zweite Sitzbankbereich 8 mit seinem zweiten Wannenelement 12 festgelegt ist.

Darüber hinaus umfasst die Sitzvorrichtung 2 eine Verstelleinrichtung 20, durch die zumindest der zweite Sitzbankbereich 8 werkzeuglos durch Bewegen entgegen einer Fügerichtung 22 aus einer ersten Sitzposition, in der der Abstand zwischen dem ersten Sitzbankbereich 4 und dem zweiten Sitzbankbereich 8 minimal ist und in der der zweite Sitzbankbereich 8 gegen ein Bewegen quer zur Fügerichtung 22 festgelegt ist, lösbar und in einer Verstellposition überführbar ist, in der der zweite Sitzbankbereich 8 für ein Bewegen quer zur Fügerichtung 22 freigegeben ist und in der der quer zur Fügerichtung 22 bewegte zweite Sitzbankbereich 8 durch Bewegen in Fügerichtung 22 mindestens einer, bezüglich der ersten Sitzposition versetzten zweiten Sitzposition anordenbar ist.

Der erste Sitzbankbereich 4 ist an dem ersten Trägerelement 16 der Trägereinheit 14 mit dem ersten Wannenelement 6 linien- oder flächenhaft berührend anliegend festgelegt.

In der ersten Sitzposition und in der zweiten Sitzposition ist der zweite Sitzbankbereich 8 mit dem zweiten Wannenelement 12 am zweiten Trägerelement 18 der Trägereinheit 14 linien- oder flächenhaft berührend festgelegt. In der Verstellposition ist das zweite Wannenelement 12 des zweiten Sitzbankbereichs 8 berührungsfrei bezüglich des zweiten Trägerelements 18 der Trägereinheit 14 angeordnet.

Die Verstelleinrichtung 20 umfasst bei dem in den Figuren gezeigten Ausführungsbeispiel eine Führungseinheit 24, durch die das Bewegen des zweiten Sitzbankbereichs 8 quer zur Fügerichtung 22 führbar ist. Die Führungseinheit 24 umfasst hierzu bei dem in den Figuren gezeigten Ausführungsbeispiel vier durchgehende Aussparungen 26 im zweiten Wannenelement 12 und mindestens ein in Fügerichtung 22 erstrecktes und an der Trägereinheit 14 festgelegtes bolzen- oder zapfenförmiges Führungsmittel 28. Das Führungsmittel 28 hat einen zur Aussparung 26 korrespondierenden, insbesondere komplementären, Querschnitt. Die Aussparungen 26 sind derart ausgebildet, dass mit einem ersten Ende einen Anschlag für das Führungsmittel 28 auf Höhe der ersten Sitzposition und mit einem zweiten Ende einen Anschlag für das Führungsmittel 28 in der zweiten Sitzposition bilden.

Darüber hinaus umfasst die Verstelleinrichtung 20 bei dem in den Figuren gezeigten Ausführungsbeispielen zwei Vorsprünge 30, die am zweiten Wannenelement 12 angeordnet sind, sowie vier korrespondierend, insbesondere komplementär, zu den Vorsprüngen 30 ausgebildete Ausnehmungen 32, die an dem zweiten Trägerelement 18 der Trägereinheit 14 angeordnet sind.

Jedem Vorsprung 30 sind hierbei zwei Ausnehmungen 32 zugeordnet. Eine erste Ausnehmung 32 ist auf Höhe der ersten Sitzposition angeordnet und eine zweite Ausnehmung 32 ist auf Höhe der zweiten Sitzposition angeordnet. Beim Anordnen des Vorsprungs 30 in einer der Ausnehmungen 32 ist eine Bewegung des zweiten Wannenelements 12 quer zur Fügerichtung 22 verhindert.

Um das zweite Wannenelement 12 des zweiten Sitzbankbereichs 8 in der ersten Sitzposition und in der zweiten Sitzposition gegen ein Bewegen entgegen der zweiten Fügerichtung 22 festzulegen, umfasst die Verstelleinrichtung 20 ein Festlegemittel 34, durch das der zweite Sitzbankbereich 8 an der Trägereinheit 14 zumindest in seiner Bewegung in oder entgegen der Fügerichtung 22 begrenzt ist. Ferner umfasst die Verstelleinrichtung 20 ein Spannmittel 36, mit dem der zweite Sitzbankbereich 8 in Fügerichtung 22 auf die Trägereinheit 14 vorgespannt ist.

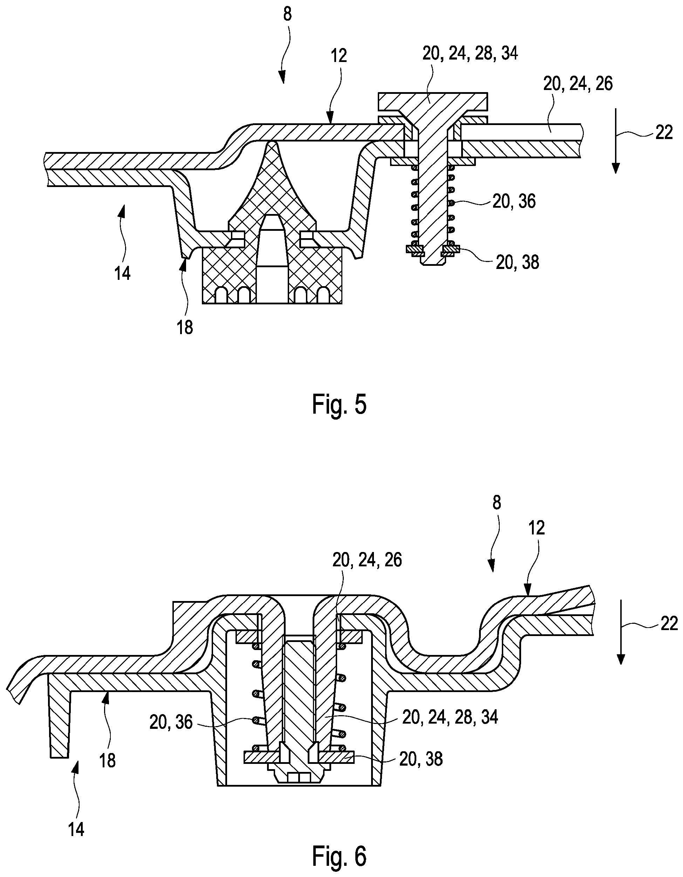

Figur 5 zeigt ein erstes Ausführungsbeispiel der Sitzvorrichtung 2, bei dem das Festlegemittel 34 als vom zweiten Wannenelement 12 separierbares Bauteil ausgebildet ist. Solchenfalls umfasst das Festlegemittel 34 einen Kopfabschnitt mit einem Querschnitt, der größer ist als der Querschnitt der Aussparung 26 im zweiten Wannenelement 12. An den Kopfabschnitt anschließend ist in Richtung hin auf die Trägereinheit 14 erstreckt, ein Halsabschnitt angeordnet, der auch das Spannmittel 36 durchgreift. An der dem Kopfabschnitt abgewandten Seite des Festlegemittels 34, ist ein Anschlagelement 38 festgelegt, das bezüglich des Halsabschnitts einen erweiterten Querschnitt umfasst und an dem sich das Spannmittel 36 mit einem Ende abstützt. Das Spannmittel 36 stützt sich mit dem dem Anschlagelement 38 abgewandten Ende an der Trägereinheit 14 ab. Durch die vorherrschende Spannkraft des Spannmittels 36 wird hierdurch das zweite Wannenelement 12 durch den Kopfabschnitt des Festlegemittels 34 in Richtung Trägereinheit 14 vorgespannt.

Beim Überführen des zweiten Wannenelements 12 von der Sitzposition in die Verstellposition, muss solchenfalls entgegen der Spannkraft des Spannmittels 36 entgegengewirkt werden, um das zweite Wannenelement 12 von der Trägereinheit 14 zu beabstanden und innerhalb der Aussparung 26 verschieben zu können.

Das Festlegemittel 34 und das Führungsmittel 28 bilden solchenfalls ein gemeinsames, einstückiges Bauteil.

Figur 6 zeigt ein zweites Ausführungsbeispiel der Sitzvorrichtung 2, bei der ein zweites Wannenelement 12, Führungsmittel 28 sowie Festlegemittel 34 ein gemeinsames, einstückiges Bauteil bilden.

Beiden Ausführungsbeispielen ist gemein, dass mehrere Pufferelemente 40 in der Trägereinheit 14, insbesondere im zweiten Trägerelement 18 der Trägereinheit 14 angeordnet sein können, mit denen eine zwischen zweiten Sitzbankbereich 8 und Trägereinheit 14 wirkende Kräfte abgefedert oder abgepuffert werden können.

### Bezugszeichenliste

- 2: Sitzvorrichtung
- 4: erster Sitzbankbereich
- 5: erste Sitzfläche
- 6: erstes Wannenelement
- 8: zweiter Sitzbankbereich
- 10: zweite Sitzfläche
- 12: zweites Wannenelement
- 14: Trägereinheit
- 16: erstes Trägerelement
- 18: zweites Trägerelement
- 20: Verstelleinrichtung
- 22: Fügerichtung
- 24: Führungseinheit
- 26: Aussparung
- 28: Führungsmittel
- 30: Vorsprung
- 32: Ausnehmung
- 34: Festlegemittel
- 36: Spannmittel
- 38: Anschlagelement
- 40: Pufferelement

## Patentansprüche

1. Sitzvorrichtung (2) für ein Neigefahrzeug mit mindestens einem ersten Sitzbankbereich (4), der eine erste Sitzfläche (5), an der ein Fahrer zum Führen und Betreiben des Neigefahrzeugs anordenbar ist, und der zumindest ein erstes Wannenelement (6) umfasst, mit mindestens einem zweiten Sitzbankbereich (8), der eine zweite Sitzfläche (10), an dem ein Beifahrer, wie Sozius, anordenbar ist, und der zumindest ein zweites Wannenelement (12) umfasst, mit mindestens einer Trägereinheit (14), an der der erste Sitzbankbereich (4) und an der der zweite Sitzbankbereich (8) festlegbar oder festgelegt sind, und mit mindestens einer Verstelleinrichtung (20), durch die zumindest der zweite Sitzbankbereich (8) werkzeuglos durch Bewegen entgegen einer Fügerichtung (22) aus einer ersten Sitzposition, in der der Abstand zwischen erstem Sitzbankbereich (4) und zweitem Sitzbankbereich (8) minimal ist und in der der zweite Sitzbankbereich (8) gegen ein Bewegen quer zur Fügerichtung (22) festgelegt ist, lösbar und in eine Verstellposition überführbar ist, in der der zweite Sitzbankbereich (8) für ein Bewegen quer zur Fügerichtung (22) freigegeben ist und in der der quer zur Fügerichtung (22) bewegte zweite Sitzbankbereich (8) durch Bewegen in Fügerichtung (22) in mindestens einer bezüglich der ersten Sitzposition versetzten zweiten Sitzposition anordenbar ist, in der der Abstand zwischen erstem Sitzbankbereich (4) und zweitem Sitzbankbereich (8) bezüglich der ersten Sitzposition vergrößert ist und in der der zweite Sitzbankbereich (8) gegen ein Bewegen quer zur Fügerichtung (22) festgelegt ist, **dadurch gekennzeichnet, dass** die Fügerichtung (22) quer oder schräg zur Längsachse des Neigefahrzeugs verläuft.

2. Sitzvorrichtung (2) nach Anspruch 1, **dadurch gekennzeichnet, dass** der erste Sitzbankbereich (4) an der Trägereinheit (14) mit dem ersten Wannenelement (6) auf der der ersten Sitzfläche (5) abgewandten Seite zumindest abschnittsweise linien- oder flächenhaft berührend anliegt und/oder dass der zweite Sitzbankbereich (8) in der ersten Sitzposition und in der zweiten Sitzposition an der Trägereinheit (14) mit dem zweiten Wannenelement (12) auf der der zweiten Sitzfläche (10) abgewandten Seite zumindest abschnittsweise linien- oder flächenhaft berührend anliegt und in der Verstellposition mit dem zweiten Wannenelement (12) berührungsfrei zur Trägereinheit (14) beabstandet ist.

3. Sitzvorrichtung (2) nach Anspruch 1 oder 2, **dadurch gekennzeichnet, dass** die Verstelleinrichtung (20) eine Führungseinheit (24) umfasst, durch die das Bewegen des zweiten Sitzbankbereichs (8) quer zur Fügerichtung (22) führbar oder geführt ist, wobei die Führungseinheit (24) mindestens eine quer zur Fügerichtung (22) erstreckte durchgehende Aussparung (26) im zweiten Wannenelement (12) und mindestens ein in Fügerichtung (22) erstrecktes und an der Trägereinheit (14) festgelegtes bolzen- oder zapfenförmiges Führungsmittel (28) umfasst, das einen zur Aussparung (26) korrespondierenden, insbesondere komplementären, Querschnitt umfasst.

4. Sitzvorrichtung (2) nach Anspruch 3, **dadurch gekennzeichnet, dass** die mindestens eine Aussparung (26) mit einem ersten Ende einen Anschlag für das Führungsmittel (28) in der ersten Sitzposition des zweiten Sitzbankbereichs (8) und/oder mit einem zweiten Ende einen Anschlag für das Führungsmittel (28) in der zweiten Sitzposition des zweiten Sitzbankbereichs (8) bildet.

5. Sitzvorrichtung (2) nach einem der vorhergehenden Ansprüche, **dadurch gekennzeichnet, dass** die Verstelleinrichtung (20) mindestens einen Vorsprung (30) an der Trägereinheit (14) oder an dem zweiten Wannenelement (12) umfasst und/oder dass die Verstelleinrichtung (20) mindestens zwei korrespondierend, insbesondere komplementär, zum Vorsprung (30) ausgebildete Ausnehmungen (32) an dem zweiten Wannenelement (12), bzw. an der Trägereinheit (14) umfasst, von denen eine auf Höhe der ersten Sitzposition und eine auf Höhe der zweiten Sitzposition angeordnet ist und in die der Vorsprung (30) in der jeweiligen Sitzposition eingreift und den zweiten Sitzbankbereich (8) gegen ein Bewegen quer zur Fügerichtung (22) festlegt.

6. Sitzvorrichtung (2) nach einem der vorhergehenden Ansprüche, **dadurch gekennzeichnet, dass** die Verstelleinrichtung (20) mindestens ein Festlegemittel (34) umfasst, durch das der zweite Sitzbankbereich (8) an der Trägereinheit (14) zumindest in seiner Bewegung in oder entgegen der Fügerichtung (22) begrenzt festlegbar ist und/oder dass die Verstelleinrichtung (20) mindestens ein Spannmittel (36) umfasst, durch das der zweite Sitzbankbereich (8) in Fügerichtung (22) auf die Trägereinheit (14) vorgespannt ist.

7. Sitzvorrichtung (2) nach Anspruch 6, **dadurch gekennzeichnet, dass** das Festlegemittel (34) die Aussparung (26) und eine Öffnung in der Trägereinheit (14) mit einem Halsabschnitt durchgreift, wobei das Festlegemittel (34) einen Kopfabschnitt mit einem Querschnitt umfasst, der größer ist als der Querschnitt der Aussparung (26) und der in der ersten Sitzposition und der zweiten Sitzposition an zweiten Wannenelement (12) anliegt, und wobei am Festlegemittel (34) auf der dem Kopfabschnitt abgewandten Seite mindestens ein Anschlagelement (38) am Halsabschnitt festlegbar ist, das bezüglich des Halsabschnitts einen erweiterten Querschnitt umfasst.

8. Sitzvorrichtung (2) nach Anspruch 6 oder 7, **dadurch gekennzeichnet, dass** das Spannmittel (36) zwischen dem Anschlagelement (38) und einer dem zweiten Wannenelement (12) abgewandten Seite der Trägereinheit (14) abgestützt ist, insbesondere dass das Spannmittel (36) den Halsabschnitt des Festlegemittels (34) umfangsseitig umgebend am Festlegemittel (34) angeordnet ist.

9. Sitzvorrichtung (2) nach einem der vorhergehenden Ansprüche, **dadurch gekennzeichnet, dass** das zweite Wannenelement (12), das mindestens eine Festlegemittel (34) und/oder das mindestens eine Führungsmittel (28) voneinander separierbare Bauteile umfassen oder ein gemeinsames einstückiges Bauteil bilden.

10. Sitzvorrichtung (2) nach einem der vorhergehenden Ansprüche, **dadurch gekennzeichnet, dass** die Trägereinheit (14) ein einstückiges gemeinsames Bauteil umfasst, an dem der erste Sitzbankbereich (4) und der zweite Sitzbankbereich (8) festlegbar oder festgelegt sind oder dass die Trägereinheit (14) ein erstes Trägerelement (16), an dem der erste Sitzbankbereich (4) festlegbar oder festgelegt ist, und ein zweites Trägerelement (18) umfasst, an dem der zweite Sitzbankbereich (8) festlegbar oder festgelegt ist, wobei erstes Trägerelement (16) und zweites Trägerelement (18) lösbar oder unlösbar aneinander festlegbar oder festgelegt sind.

## Claims

1. Seat device (2) for a tilting vehicle with at least one first seat bench area (4), which comprises a first seat surface (5), on which a driver can be arranged for driving and operating the tilting vehicle, and which comprises at least one first trough element (6), with at least one second seat bench area (8), which comprises a second seat surface (10), on which a passenger, such as a pillion rider, can be arranged, and which comprises at least one second trough element (12), with at least one carrier unit (14), on which the first seat bench area (4) and the second seat bench area (8) can be or are fixed, and with at least one adjustment device (20), by means of which at least the second seat bench area (8) can be detached without tools by moving against a joining direction (22) from a first seat position, in which the distance between the first seat bench area (4) and the second seat bench area (8) is minimal and in which the second seat bench area (8) is fixed against movement transverse to the joining direction (22), and can be transferred into an adjustment position, in which the second seat bench area (8) is released for movement transverse to the joining direction (22) and in which the second seat bench area (8) moved transverse to the joining direction (22) can be arranged by moving in the joining direction (22) in at least one second seat position offset with respect to the first seat position, in which the distance between the first seat bench area (4) and the second seat bench area (8) is increased with respect to the first seat position and in which the second seat bench area (8) is fixed against movement transverse to the joining direction (22), **characterized in that** the joining direction (22) runs transversely or obliquely to the longitudinal axis of the tilting vehicle.

2. Seat device (2) according to claim 1, **characterized in that** the first seat bench area (4) is in contact with the carrier unit (14) with the first trough element (6) on the side facing away from the first seat surface (5) at least in sections in a linear or planar manner and/or that the second seat bench area (8) in the first seat position and in the second seat position is in contact with the carrier unit (14) with the second trough element (12) on the side facing away from the second seat surface (10) at least in sections in a linear or planar manner and in the adjustment position is spaced apart from the carrier unit (14) with the second trough element (12) without contact.

3. Seat device (2) according to claim 1 or 2, **characterized in that** the adjustment device (20) comprises a guide unit (24), by means of which the movement of the second seat bench area (8) transverse to the joining direction (22) can be or is guided, wherein the guide unit (24) comprises at least one continuous recess (26) in the second trough element (12) extending transversely to the joining direction (22) and at least one bolt-shaped or pin-shaped guide means (28) extending in the joining direction (22) and fixed to the carrier unit (14), which comprises a cross-section corresponding, in particular complementary, to the recess (26).

4. Seat device (2) according to claim 3, **characterized in that** the at least one recess (26) forms with a first end a stop for the guide means (28) in the first seat position of the second seat bench area (8) and/or with a second end a stop for the guide means (28) in the second seat position of the second seat bench area (8).

5. Seat device (2) according to one of the preceding claims, **characterized in that** the adjustment device (20) comprises at least one protrusion (30) on the carrier unit (14) or on the second trough element (12) and/or that the adjustment device (20) comprises at least two recesses (32) formed correspondingly, in particular complementarily, to the protrusion (30) on the second trough element (12) or on the carrier unit (14), of which one is arranged at the level of the first seat position and one at the level of the second seat position and into which the protrusion (30) engages in the respective seat position and fixes the second seat bench area (8) against movement transverse to the joining direction (22).

6. Seat device (2) according to one of the preceding claims, **characterized in that** the adjustment device (20) comprises at least one fixing means (34), by means of which the second seat bench area (8) can be fixedly secured to the carrier unit (14) at least in its movement in or against the joining direction (22) and/or that the adjustment device (20) comprises at least one tensioning means (36), by means of which the second seat bench area (8) is pre-tensioned in the joining direction (22) onto the carrier unit (14).

7. Seat device (2) according to claim 6, **characterized in that** the fixing means (34) passes through the recess (26) and an opening in the carrier unit (14) with a neck portion, wherein the fixing means (34) comprises a head portion with a cross-section that is larger than the cross-section of the recess (26) and which abuts against the second trough element (12) in the first seat position and the second seat position, and wherein at least one stop element (38) can be fixed to the neck portion on the side of the fixing means (34) facing away from the head portion, which comprises an enlarged cross-section with respect to the neck portion.

8. Seat device (2) according to claim 6 or 7, **characterized in that** the tensioning means (36) is supported between the stop element (38) and a side of the carrier unit (14) facing away from the second trough element (12), in particular that the tensioning means (36) is arranged on the fixing means (34) surrounding the neck portion of the fixing means (34) on the circumferential side.

9. Seat device (2) according to one of the preceding claims, **characterized in that** the second trough element (12), the at least one fixing means (34) and/or the at least one guide means (28) comprise separable components or form a common one-piece component.

10. Seat device (2) according to one of the preceding claims, **characterized in that** the carrier unit (14) comprises a one-piece common component on which the first seat bench area (4) and the second seat bench area (8) can be or are fixed or that the carrier unit (14) comprises a first carrier element (16), on which the first seat bench area (4) can be or is fixed, and a second carrier element (18), on which the second seat bench area (8) can be or is fixed, wherein the first carrier element (16) and the second carrier element (18) can be or are detachably or non-detachably fixed to each other.

## Revendications

1. Dispositif de siège (2) pour un véhicule inclinable comprenant au moins une première zone de banquette (4) qui comprend une première surface d'assise (5) sur laquelle un conducteur peut être disposé pour conduire et faire fonctionner le véhicule inclinable, et qui comprend au moins un premier élément en forme de bac (6), avec au moins une deuxième zone de banquette (8) qui comprend une deuxième surface d'assise (10) sur laquelle un passager, tel qu'un passager arrière, peut être disposé, et qui comprend au moins un deuxième élément en forme de bac (12), avec au moins une unité de support (14) sur laquelle la première zone de banquette (4) et la deuxième zone de banquette (8) peuvent être ou sont fixées, et avec au moins un dispositif de réglage (20) par lequel au moins la deuxième zone de banquette (8) peut être détachée sans outils en se déplaçant dans le sens opposé à une direction d'assemblage (22) à partir d'une première position d'assise, dans laquelle la distance entre la première zone de banquette (4) et la deuxième zone de banquette (8) est minimale et dans laquelle la deuxième zone de banquette (8) est fixée contre un mouvement transversal à la direction d'assemblage (22), et peut être transférée dans une position de réglage, dans laquelle la deuxième zone de banquette (8) est libérée pour un mouvement transversal à la direction d'assemblage (22) et dans laquelle la deuxième zone de banquette (8) déplacée transversalement à la direction d'assemblage (22) peut être disposée en se déplaçant dans la direction d'assemblage (22) dans au moins une deuxième position d'assise décalée par rapport à la première position d'assise, dans laquelle la distance entre la première zone de banquette (4) et la deuxième zone de banquette (8) est augmentée par rapport à la première position d'assise et dans laquelle la deuxième zone de banquette (8) est fixée contre un mouvement transversal à la direction d'assemblage (22), **caractérisé en ce que** la direction d'assemblage (22) s'étend transversalement ou obliquement à l'axe longitudinal du véhicule inclinable.

2. Dispositif de siège (2) selon la revendication 1, **caractérisé en ce que** la première zone de banquette (4) est en contact avec l'unité de support (14) avec le premier élément en forme de bac (6) sur le côté opposé à la première surface d'assise (5) au moins par sections de manière linéaire ou plane et/ou **en ce que** la deuxième zone de banquette (8) dans la première position d'assise et dans la deuxième position d'assise est en contact avec l'unité de support (14) avec le deuxième élément en forme de bac (12) sur le côté opposé à la deuxième surface d'assise (10) au moins par sections de manière linéaire ou plane et dans la position de réglage est espacée de l'unité de support (14) avec le deuxième élément en forme de bac (12) sans contact.

3. Dispositif de siège (2) selon la revendication 1 ou 2, **caractérisé en ce que** le dispositif de réglage (20) comprend une unité de guidage (24) par laquelle le mouvement de la deuxième zone de banquette (8) transversalement à la direction d'assemblage (22) peut être ou est guidé, l'unité de guidage (24) comprenant au moins un évidement continu (26) dans le deuxième élément en forme de bac (12) s'étendant transversalement à la direction d'assemblage (22) et au moins un moyen de guidage (28) en forme de boulon ou de broche s'étendant dans la direction d'assemblage (22) et fixé à l'unité de support (14), qui comprend une section transversale correspondante, en particulier complémentaire, à l'évidement (26).

4. Dispositif de siège (2) selon la revendication 3, **caractérisé en ce que** l'au moins un évidement (26) forme avec une première extrémité une butée pour le moyen de guidage (28) dans la première position d'assise de la deuxième zone de banquette (8) et/ou avec une deuxième extrémité une butée pour le moyen de guidage (28) dans la deuxième position d'assise de la deuxième zone de banquette (8).

5. Dispositif de siège (2) selon l'une des revendications précédentes, **caractérisé en ce que** le dispositif de réglage (20) comprend au moins une saillie (30) sur l'unité de support (14) ou sur le deuxième élément en forme de bac (12) et/ou **en ce que** le dispositif de réglage (20) comprend au moins deux évidements (32) formés de manière correspondante, en particulier complémentaire, à la saillie (30) sur le deuxième élément en forme de bac (12) ou sur l'unité de support (14), dont l'un est disposé au niveau de la première position d'assise et l'autre au niveau de la deuxième position d'assise et dans lesquels la saillie (30) s'engage dans la position d'assise respective et fixe la deuxième zone de banquette (8) contre un mouvement transversal à la direction d'assemblage (22).

6. Dispositif de siège (2) selon l'une des revendications précédentes, **caractérisé en ce que** le dispositif de réglage (20) comprend au moins un moyen de fixation (34) par lequel la deuxième zone de banquette (8) peut être fixée à l'unité de support (14) au moins dans son mouvement dans ou contre la direction d'assemblage (22) et/ou **en ce que** le dispositif de réglage (20) comprend au moins un moyen de tension (36) par lequel la deuxième zone de banquette (8) est précontrainte dans la direction d'assemblage (22) sur l'unité de support (14).

7. Dispositif de siège (2) selon la revendication 6, **caractérisé en ce que** le moyen de fixation (34) traverse l'évidement (26) et une ouverture dans l'unité de support (14) avec une partie de col, le moyen de fixation (34) comprenant une partie de tête avec une section transversale qui est plus grande que la section transversale de l'évidement (26) et qui s'appuie contre le deuxième élément en forme de bac (12) dans la première position d'assise et la deuxième position d'assise, et **en ce qu'**au moins un élément de butée (38) peut être fixé à la partie de col sur le côté du moyen de fixation (34) opposé à la partie de tête, qui comprend une section transversale élargie par rapport à la partie de col.

8. Dispositif de siège (2) selon la revendication 6 ou 7, **caractérisé en ce que** le moyen de tension (36) est supporté entre l'élément de butée (38) et un côté de l'unité de support (14) opposé au deuxième élément en forme de bac (12), en particulier **en ce que** le moyen de tension (36) est disposé sur le moyen de fixation (34) entourant la partie de col du moyen de fixation (34) sur le côté circonférentiel.

9. Dispositif de siège (2) selon l'une des revendications précédentes, **caractérisé en ce que** le deuxième élément en forme de bac (12), l'au moins un moyen de fixation (34) et/ou l'au moins un moyen de guidage (28) comprennent des composants séparables ou forment un composant monobloc commun.

10. Dispositif de siège (2) selon l'une des revendications précédentes, **caractérisé en ce que** l'unité de support (14) comprend un composant monobloc commun sur lequel la première zone de banquette (4) et la deuxième zone de banquette (8) peuvent être ou sont fixées ou **en ce que** l'unité de support (14) comprend un premier élément de support (16), sur lequel la première zone de banquette (4) peut être ou est fixée, et un deuxième élément de support (18), sur lequel la deuxième zone de banquette (8) peut être ou est fixée, le premier élément de support (16) et le deuxième élément de support (18) pouvant être ou étant fixés l'un à l'autre de manière détachable ou non détachable.
